# FASCICULE DE BREVET EUROPEEN

(11) **EP 2 246 242 B1**
(45) Date de publication et mention de la délivrance du brevet: **07.11.2012**
(21) Numéro de dépôt: 09159013.3
(22) Date de dépôt: 29.04.2009
(51) Int. Cl.: B62D 63/06

(54) **Remorque pour véhicule automobile comportant une caisse escamotable**
Anhänger für Kraftfahrzeug, der einen verschiebbaren Kasten umfasst
Trailer for an automobile comprising a retractable truck box

(43) Date de publication de la demande: 03.11.2010
(73) Titulaire: Sorelpol SP z.o.o., 01-233 Warszawa (PL)
(72) Inventeur: Simon, Julien, 64-100, Leszno (PL)
(74) Mandataire: Kohn, Philippe

(56) Documents cités:
- DE-A1- 3 200 792
- GB-A- 2 278 266

## Description

L'invention concerne une remorque légère pour véhicule automobile dont la caisse est apte à occuper une position escamotée.

L'invention concerne plus particulièrement une remorque pour véhicule automobile, qui comporte au moins :
- un châssis qui s'étend d'arrière en avant selon un axe longitudinal de roulage de la remorque et qui comporte des moyens d'attelage de la remorque,
- deux roues qui sont montées rotatives sur le châssis, autour d'un axe transversal,
- une caisse de transport qui est portée par le châssis.

Ce type de remorque est destiné à être attelé à l'arrière d'un véhicule automobile, pour transporter des objets et matériaux divers.

A cet effet, la remorque comporte un châssis qui est constitué notamment d'une flèche d'attelage, ou triangle d'attelage, dont l'extrémité avant comporte des moyens d'attelage, pour atteler la remorque sur le véhicule tracteur.

La flèche d'attelage s'étend longitudinalement selon une longueur minimum, cette longueur visant à écarter longitudinalement la caisse de la remorque par rapport à l'arrière du véhicule, notamment afin de permettre à la remorque de pivoter lorsque le véhicule tourne, sans que la caisse de la remorque ne percute l'arrière du véhicule.

De même, le respect d'une longueur minimum de la flèche d'attelage permet d'écarter l'axe des roues de la remorque par rapport au véhicule, afin de faciliter la manoeuvre de la remorque, notamment lorsque le véhicule se déplace en marche arrière.

Afin de diminuer les coûts de transport de la remorque, depuis le fabricant jusqu'au client, une solution est d'optimiser le nombre de remorques transportées en un seul voyage, par exemple un voyage par camion.

A cet effet, la remorque est chargée sur le camion dans une position verticale, reposant sur sa ridelle arrière, position dans laquelle la remorque prend le moins de place.

La plupart des clients souhaite recevoir la remorque complètement montée, prête à l'utilisation, le problème étant que la longueur, ou l'encombrement longitudinal, de la remorque peut être supérieur à la hauteur utile de chargement du camion, auquel cas la remorque ne peut pas être chargée dans une position verticale dans le camion.

On connaît un type de remorque comportant un châssis et une caisse montée mobile sur le châssis, entre une position d'utilisation dans laquelle la caisse s'étend parallèlement au châssis de façon à pouvoir transporter des objets et à permettre le déplacement de la remorque attelée, et une position de chargement, ou de déchargement, dans laquelle la caisse est par exemple reculée et inclinée pour faciliter son chargement.

Une telle remorque est par exemple décrite dans le document EP-A-0.125.351.

Toutefois, une telle remorque n'est pas apte à résoudre le problème précédemment décrit, ni destinée à résoudre ce problème.

En effet, ce type de remorque est plus long lorsque la caisse occupe sa position de chargement que lorsque la caisse occupe sa position d'utilisation.

On connaît aussi du document DE-A1-3200792 une remorque pour véhicule automobile du type mentionné précédemment dans laquelle la caisse de transport, qui est portée par le châssis, comporte au moins un bras d'articulation dont une première extrémité est montée pivotante sur le châssis autour d'un premier axe transversal, et une seconde extrémité opposée est montée pivotante sur la caisse autour d'un second axe transversal, de sorte que la caisse est apte à être entraînée d'avant en arrière par déplacement autour dudit premier axe transversal, entre sa position arrière et sa position avant.

Toutefois, dans ce document, en position avancée de la caisse, la remorque ne peut pas rouler.

L'invention vise notamment à proposer une remorque qui permet d'optimiser son transport, par exemple dans un camion de transport et à remédier aux solutions proposées dans l'état de la technique.

Dans ce but, l'invention propose une remorque du type décrit précédemment, caractérisée en ce que les deux roues sont montées rotatives autour d'un axe transversal dont la position est fixe par rapport au châssis.

Selon d'autres caractéristiques de l'invention :
- dans sa position avant escamotée, la caisse s'étend longitudinalement sur le châssis et parallèlement au châssis ;
- la remorque comporte au moins un bras d'articulation dont une première extrémité est montée pivotante sur le châssis autour d'un premier axe transversal, et une seconde extrémité opposée est montée pivotante sur la caisse autour d'un second axe transversal, de sorte que la caisse est apte à être entraînée d'avant en arrière par déplacement autour dudit premier axe transversal, entre sa position arrière et sa position avant ;
- la seconde extrémité du bras est montée pivotante sur la partie arrière de la caisse, et la partie avant de la caisse est apte à glisser sur le châssis lorsque la caisse est entraînée en déplacement entre sa position avant et sa position arrière ;
- la remorque comporte un premier moyen de guidage pour guider longitudinalement la caisse par rapport au châssis au cours du déplacement de la caisse entre sa position arrière d'utilisation et sa position avant escamotée, et pour bloquer transversalement la caisse par rapport au châssis ;
- la remorque comporte un second moyen de guidage pour guider longitudinalement la partie avant de la caisse par rapport au châssis au cours du déplacement de la caisse entre sa position arrière d'utilisation et sa position avant escamotée, et pour plaquer la partie avant de la caisse contre le châssis ;
- dans sa position arrière d'utilisation, la caisse est agencée en porte à faux sur le châssis ;
- la caisse comporte deux garde-boues qui sont agencés chacun au dessus d'une roue associée lorsque la caisse occupe sa position arrière d'utilisation, et qui sont agencés chacun en avant de la roue associée lorsque la caisse occupe sa position avant escamotée, le bras est agencé de sorte que chaque garde-boue contourne la roue associée lors du basculement de la caisse entre sa position arrière d'utilisation et sa position avant ;
- la remorque comporte des moyens de verrouillage de la caisse sur le châssis, afin de verrouiller la caisse sélectivement dans sa position arrière et dans sa position avant ;
- dans sa position arrière, la caisse est centrée longitudinalement par rapport à l'axe transversal des roues.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue d'ensemble en perspective, qui illustre une remorque comportant un châssis représenté partiellement en pointillé et une caisse mobile dans sa position arrière d'utilisation selon l'invention ;
- la figure 2 est une vue de côté, qui illustre la caisse dans sa position arrière d'utilisation ;
- la figure 3 est une vue de côté, qui illustre la caisse dans une position intermédiaire ;
- la figure 4 est une vue de côté, qui illustre la caisse dans sa position avant escamotée.

De manière à faciliter la compréhension de la description et des revendications, on adoptera la terminologie "longitudinal", "transversal" et "vertical" selon le trièdre L, T, V indiqué sur les figures, l'axe longitudinal L correspondant à l'axe général de roulage vers l'avant de la remorque selon la flèche L et l'axe vertical V étant orienté sans référence à la gravité terrestre.

Dans la description qui va suivre, des composants ou éléments identiques, similaires ou analogues seront désignés par les mêmes chiffres de référence.

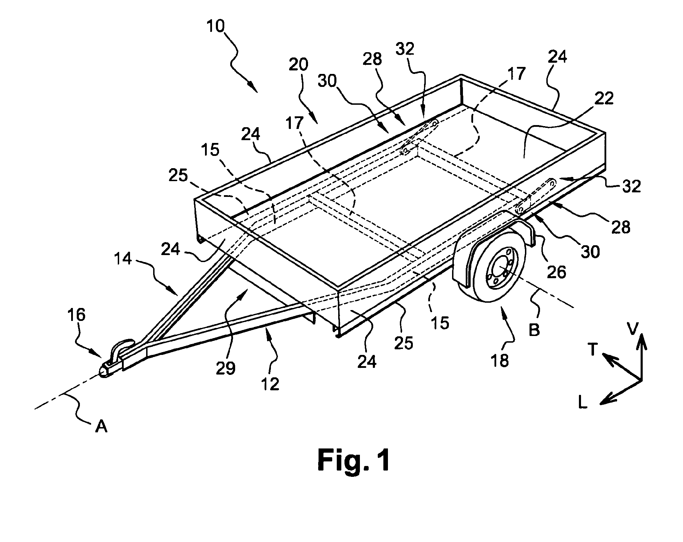

On a représenté à la figure 1 une remorque 10 comportant un châssis 12 qui s'étend d'arrière en avant selon un axe A longitudinal de roulage de la remorque 10.

La remorque 10 illustrée aux figures présente une symétrie générale de conception par rapport à un plan longitudinal vertical médian (non représenté) passant par le milieu du châssis 12.

Le châssis 12 comporte une partie avant qui forme une flèche d'attelage 14 triangulaire équipée de moyens d'attelage 16 sur un véhicule automobile (non représenté).

Comme on peut le voir à la figure 1, le châssis 12 comporte une partie arrière dont deux longerons 15 parallèles s'étendent longitudinalement depuis la flèche d'attelage 14 et deux traverses 17 transversales relient les longerons 15 entre eux.

De plus, la partie arrière du châssis 12 est équipée de deux roues 18, dont une seule est représentée à la figure 1, qui sont montées libres en rotation autour d'un axe B transversal.

Enfin, la partie arrière du châssis 12 supporte une caisse 20 pour le transport d'objets et matériaux divers.

Selon la figure 1, la caisse 20 comporte un fond 22 qui s'étend dans un plan longitudinal transversal, c'est à dire dans un plan horizontal selon les figures, parallèlement au châssis 12.

La caisse 20 est délimitée latéralement par quatre ridelles 24 verticales, dont une ridelle arrière qui est montée pivotante autour d'un axe transversal pour favoriser le chargement et le déchargement de la caisse 20.

De plus, la caisse 20 est flanquée de deux garde-boues 26 qui sont chacun fixés à l'extérieur de la caisse 20, contre une ridelle 24 latérale, et qui sont chacun agencés au dessus d'une roue 18 associée.

Enfin, la caisse 20 comporte deux barres 25 latérales, formant premier moyen de guidage, qui s'étendent chacune longitudinalement au dessous de la caisse 20, de sorte que les deux longerons 15 du châssis 12 sont interposés transversalement entre les deux barres 25 latérales de la caisse 20.

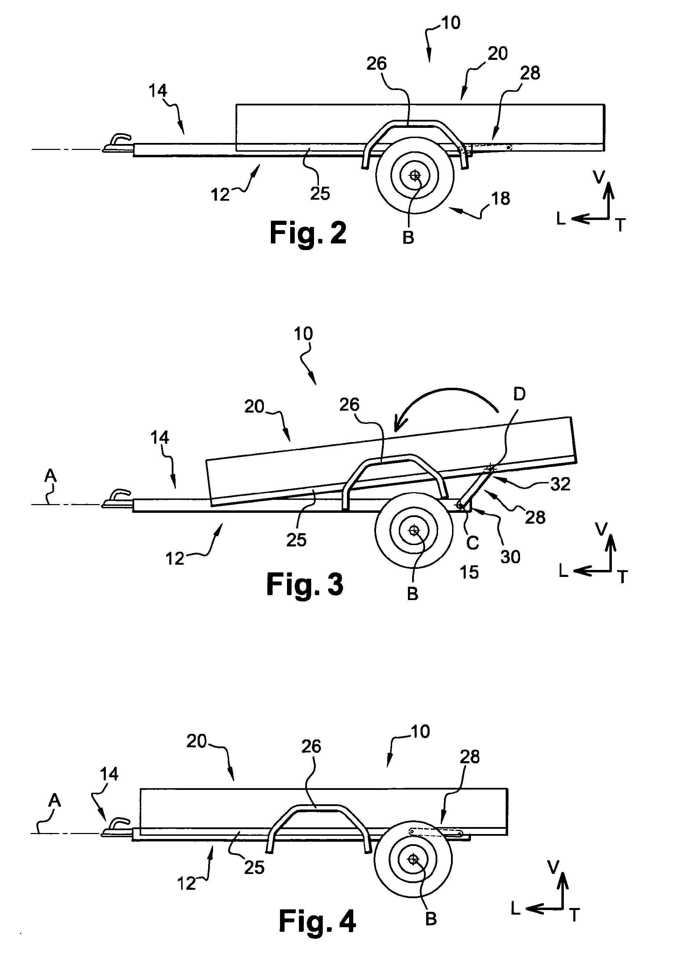

La caisse 20 est montée mobile entre une position arrière d'utilisation, représentée aux figures 1 et 2, dans laquelle la caisse 20 s'étend longitudinalement sur le châssis 12, et une position avant escamotée, représentée à la figure 4, dans laquelle la caisse 20 s'étend longitudinalement sur le châssis 12 de façon à diminuer l'encombrement longitudinal de la remorque 10.

A cet effet, comme on peut le voir sur les figures, le châssis 12 de la remorque 10 ne s'étend pas jusqu'à l'extrémité arrière de la caisse 20, lorsque la caisse 20 occupe sa position arrière d'utilisation, la caisse 20 étant agencée en porte à faux sur le châssis 12.

Ainsi, la longueur globale de la remorque 10, lorsque la caisse 20 occupe sa position arrière d'utilisation, est inférieure à la longueur globale de la remorque 10 lorsque la caisse 20 occupe sa position avant escamotée dans laquelle la caisse est avancée vers l'avant.

L'expression « longueur globale » signifie ici encombrement longitudinal de la remorque 10.

Dans chacune des positions de la caisse 20, les barres 25 latérales de la caisse 20 coopèrent avec les longerons 15 du châssis 12, de sorte que la caisse 20 est bloquée en déplacement transversal par rapport au châssis 12 et la caisse 20 est guidée en déplacement longitudinal.

La position arrière d'utilisation est une position dite normale, dans laquelle la remorque 10 est apte à être tractée et la caisse 20 est apte à occupée un état chargé.

Dans cette position arrière, les garde-boues 26 sont agencés chacun au dessus de la roue 18 associée et la caisse 20 est centrée longitudinalement par rapport à l'axe B transversal des roues 18, de sorte que les roues 18 sont agencées à équidistance de l'extrémité arrière et de l'extrémité avant de la caisse 20 selon un axe longitudinal.

A l'inverse, la position avant escamotée est une position dans laquelle la remorque 10 est apte à être garée, stockée ou transportée aisément grâce à son faible encombrement longitudinal.

Dans cette position avant, les garde-boues 26 sont agencés chacun en avant de la roue 18 associée.

On notera aussi que, lorsque la caisse 20 occupe sa position avant escamotée, la remorque 10 peut rouler et être déplacée, par exemple pour faire rouler la remorque 10 dans un camion de transport.

Pour permettre le déplacement de la caisse 20 par rapport au châssis 12, la remorque 10 comporte deux bras 28 d'articulation opposés transversalement qui relient chacun la partie arrière du châssis 12 sur une partie arrière de la caisse 20.

Chaque bras 28 comporte une première extrémité 30 qui est montée pivotante sur le châssis 12 autour d'un premier axe transversal C, et une seconde extrémité 32 qui est montée pivotante sur la caisse 20 autour d'un second axe transversal D, de sorte que la caisse 20 est apte à être entraînée d'avant en arrière par pivotement, ou basculement, autour du premier axe transversal C, entre sa position arrière et sa position avant escamotée.

Les bras 28 sont agencés de sorte que chaque garde-boue 26 évite la roue 18 associée lors du déplacement de la caisse 20 entre sa position arrière d'utilisation et sa position avant escamotée.

Selon la figure 3, la partie avant de la caisse 20 est apte à glisser longitudinalement sur la flèche d'attelage 14 lorsque la caisse 20 est entraînée en déplacement entre sa position avant et sa position arrière.

De plus, la caisse 20 comporte un arceau 29, formant second moyen de guidage, qui s'étend depuis le dessous de la caisse 20 et qui encercle la flèche d'attelage 14, afin de plaquer la partie avant de la caisse 20 contre la flèche d'attelage 14 du châssis 12.

Ainsi, l'arceau 29 permet de guider la caisse 20 contre la flèche d'attelage 14 au cours du déplacement longitudinal de la caisse 20.

Un utilisateur peut aisément entraîner la caisse 20 depuis sa position arrière vers sa position avant en soulevant la partie arrière de la caisse 20 et en la poussant vers l'avant.

Enfin, la remorque 10 comporte des moyens de verrouillage (non représentés) de la caisse 20 sur le châssis 12, afin de verrouiller la caisse 20 sélectivement dans sa position arrière et dans sa position avant.

Les moyens de verrouillage sont des moyens de verrouillage mécanique par exemple, qui comportent une goupille qui coopère avec la caisse 20 et la châssis 12 de façon à empêcher la caisse 20 de se déplacer par rapport au châssis 12.

## Revendications

1. Remorque (10) pour véhicule automobile, qui comporte au moins :
- un châssis (12) qui s'étend d'arrière en avant selon un axe (A) longitudinal de roulage de la remorque (10) et qui comporte des moyens d'attelage (16) de la remorque (10),
- deux roues (18) qui sont montées rotatives sur le châssis (12), autour d'un axe transversal (B),
- une caisse (20) de transport qui est portée par le châssis (12), et qui est montée mobile entre une position arrière d'utilisation dans laquelle la caisse (20) s'étend longitudinalement sur le châssis (12), et une position avant escamotée dans laquelle la caisse (20) est avancée selon une direction longitudinale par rapport à sa position arrière, de façon à diminuer l'encombrement longitudinal de la remorque (10),
la remorque (10) comportant au moins un bras (28) d'articulation dont une première extrémité (30) est montée pivotante sur le châssis (12) autour d'un premier axe (C) transversal, et une seconde extrémité (32) opposée est montée pivotante sur la caisse (20) autour d'un second axe (D) transversal, de sorte que la caisse (20) est apte à être entraînée d'avant en arrière par déplacement autour dudit premier axe (C) transversal, entre sa position arrière et sa position avant
**caractérisée en ce que** les deux roues (18) sont montées rotatives autour d'un axe transversal (B) dont la position est fixe par rapport au châssis (12).

2. Remorque (10) selon la revendication précédente, **caractérisée en ce que**, dans sa position avant escamotée, la caisse (20) s'étend longitudinalement sur le châssis (12) et parallèlement au châssis (12).

3. Remorque (10) selon l'une quelconque des revendications précédentes, **caractérisée en ce que** la seconde extrémité (32) du bras (28) est montée pivotante sur la partie arrière de la caisse (20), et la partie avant de la caisse (20) est apte à glisser sur le châssis (12) lorsque la caisse (20) est entraînée en déplacement entre sa position avant et sa position arrière.

4. Remorque (10) selon l'une quelconque des revendications précédentes, **caractérisée en ce que** la remorque (10) comporte un premier moyen de guidage (25) pour guider longitudinalement la caisse (20) par rapport au châssis (12) au cours du déplacement de la caisse (20) entre sa position arrière d'utilisation et sa position avant escamotée, et pour bloquer transversalement la caisse (20) par rapport au châssis (12).

5. Remorque (10) selon l'une quelconque des revendications précédentes, **caractérisée en ce que** la remorque (10) comporte un second moyen de guidage (29) pour guider longitudinalement la partie avant de la caisse (20) par rapport au châssis (12) au cours du déplacement de la caisse (20) entre sa position arrière d'utilisation et sa position avant escamotée, et pour plaquer la partie avant de la caisse (20) contre le châssis (12).

6. Remorque (10) selon l'une quelconque des revendications précédentes, **caractérisée en ce que**, dans sa position arrière d'utilisation, la caisse (20) est agencée en porte à faux sur le châssis (12).

7. Remorque (10) selon l'une quelconque des revendications précédentes, **caractérisée en ce que** la caisse (20) comporte deux garde-boues (26) qui sont agencés chacun au dessus d'une roue (18) associée lorsque la caisse (20) occupe sa position arrière d'utilisation, et qui sont agencés chacun en avant de la roue (18) associée lorsque la caisse (20) occupe sa position avant escamotée, et **en ce que** le bras (28) est agencé de sorte que chaque garde-boue (26) contourne la roue (18) associée lors du basculement de la caisse (20) entre sa position arrière d'utilisation et sa position avant.

8. Remorque (10) selon l'une quelconque des revendications précédentes, **caractérisée en ce que** la remorque (10) comporte des moyens de verrouillage de la caisse (20) sur le châssis (12), afin de verrouiller la caisse (20) sélectivement dans sa position arrière et dans sa position avant.

9. Remorque (10) selon l'une quelconque des revendications précédentes, **caractérisée en ce que** dans sa position arrière, la caisse (20) est centrée longitudinalement par rapport à l'axe (B) transversal des roues (18).

## Claims

1. Trailer (10) for a motor vehicle, which comprises at least:
- a chassis (12) which extends from the rear forwards according to a longitudinal axis (A) of travel of the trailer (10), and comprises means (16) for coupling of the trailer (10);
- two wheels (18) which are fitted such as to rotate on the chassis (12) around a transverse axis (B);
- a transport box (20) which is supported by the chassis (12), and is fitted such as to be mobile between a rear position of use, in which the box (20) extends longitudinally on the chassis (12), and a front retracted position, in which the box (20) is advanced according to a longitudinal direction relative to its rear position, such as to reduce the longitudinal dimension of the trailer (10);
the trailer (10) comprising at least one articulation arm (28), a first end (30) of which is fitted such as to pivot on the chassis (12) around a first transverse axis (C), and a second, opposite end (32) of which is fitted such as to pivot on the box (20) around a second transverse axis (D), such that the box (20) can be driven from the front rearwards by displacement around the said first transverse axis (C), between its rear position and its front position,
**characterised in that** the two wheels (18) are fitted such as to rotate around a transverse axis (B), the position of which is fixed relative to the chassis (12).

2. Trailer (10) according to the preceding claim, **characterised in that**, in its front retracted position, the box (20) extends longitudinally on the chassis (12) and parallel to the chassis (12).

3. Trailer (10) according to any one of the preceding claims, **characterised in that** the second end (32) of the arm (28) is fitted such as to pivot on the rear part of the box (20), and the front part of the box (20) can slide on the chassis (12) when the box (20) is driven in displacement between its front position and its rear position.

4. Trailer (10) according to any one of the preceding claims, **characterised in that** the trailer (10) comprises a first guide means (25) in order to guide the box (20) longitudinally relative to the chassis (12) during the displacement of the box (20) between its rear position of use and its front retracted position, and in order to block the box (20) transversely relative to the chassis (12).

5. Trailer (10) according to any one of the preceding claims, **characterised in that** the trailer (10) comprises a second guide means (29) in order to guide the front part of the box (20) longitudinally relative to the chassis (12) during the displacement of the box (20) between its rear position of use and its front retracted position, and in order to place the front part of the box (20) against the chassis (12).

6. Trailer (10) according to any one of the preceding claims, **characterised in that**, in its rear position of use, the box (20) is arranged in a cantilevered manner on the box (12).

7. Trailer (10) according to any one of the preceding claims, **characterised in that** the box (20) comprises two mudguards (26) which are each arranged above an associated wheel (18) when the box (20) occupies its rear position of use, and are each arranged at the front of the associated wheel (18) when the box (20) occupies its front retracted position, and **in that** the arm (28) is arranged such that each mudguard (26) follows the contours of the associated wheel (18) during the tilting of the box (20) between its rear position of use and its front position.

8. Trailer (10) according to any one of the preceding claims, **characterised in that** the trailer (10) comprising means for locking the box (20) on the chassis (12) in order to lock the box (20) selectively in its rear position and in its front position.

9. Trailer (10) according to any one of the preceding claims, **characterised in that**, in its rear position, the box (20) is centred longitudinally relative to the transverse axis (B) of the wheels (18).

## Patentansprüche

1. Anhänger (10) für Kraftfahrzeug, der wenigstens umfasst:
- ein Chassis (12), das sich längs einer Roll-Längsachse (A) des Anhängers (10) von vorn nach hinten erstreckt und das Kupplungsmittel (16) des Anhängers (10) aufweist,
- zwei Räder (18), die am Chassis (12) um eine Querachse (B) drehbar montiert sind,
- einen Transportkastenaufbau (20), der von dem Chassis (10) getragen wird und der zwischen einer hinteren Verwendungsposition, in der sich der Kastenaufbau (20) in Längsrichtung auf dem Chassis (12) erstreckt, und einer vorderen zurückgezogenen Position, in der der Kastenaufbau (20) in einer Längsrichtung in Bezug auf seine hintere Position nach vorn bewegt ist, damit der Platzbedarf in Längsrichtung des Anhängers (10) verringert ist, beweglich ist,
wobei der Anhänger (10) wenigstens einen Gelenkarm (28) umfasst, wovon ein erstes Ende (30) an dem Chassis (12) um eine erste Querachse (C) schwenkbar montiert ist und ein gegenüberliegendes zweites Ende (32) an dem Kastenaufbau (20) um eine zweite Querachse (D) schwenkbar montiert ist, derart, dass der Kastenaufbau (20) durch Verlagern um die erste Querachse (C) zwischen seiner hinteren Position und seiner vorderen Position von hinten nach vorn bewegt werden kann, **dadurch gekennzeichnet, dass** die zwei Räder (18) um eine Querachse (B) drehbar montiert sind, deren Position in Bezug auf das Chassis (12) fest ist.

2. Anhänger (10) nach dem vorhergehenden Anspruch, **dadurch gekennzeichnet, dass** sich der Kastenaufbau (20) in der vorderen zurückgezogenen Position in Längsrichtung auf dem Chassis (12) und parallel zu dem Chassis (12) erstreckt.

3. Anhänger (10) nach einem der vorhergehenden Ansprüche, **dadurch gekennzeichnet, dass** das zweite Ende (32) des Arms (28) an dem hinteren Teil des Kastenaufbaus (20) schwenkbar montiert ist und dass der vordere Teil des Kastenaufbaus (20) auf dem Chassis (12) gleiten kann, wenn der Kastenaufbau (20) zwischen seiner vorderen Position und seiner hinteren Position verlagernd bewegt wird.

4. Anhänger (10) nach einem der vorhergehenden Ansprüche, **dadurch gekennzeichnet, dass** der Anhänger (10) ein erstes Führungsmittel (25) umfasst, um den Kastenaufbau (20) in Bezug auf das Chassis (12) während der Verlagerung des Kastenaufbaus (20) zwischen seiner hinteren Verwendungsposition und seiner vorderen zurückgezogenen Position in Längsrichtung zu führen und um den Kastenaufbau (20) in Bezug auf das Chassis (12) in Querrichtung zu blockieren.

5. Anhänger (10) nach einem der vorhergehenden Ansprüche, **dadurch gekennzeichnet, dass** der Anhänger (10) ein zweites Führungsmittel (29) umfasst, um den vorderen Teil des Kastenaufbaus (20) in Bezug auf das Chassis (12) während der Verlagerung des Kastenaufbaus (20) zwischen seiner hinteren Verwendungsposition und seiner vorderen zurückgezogenen Position in Längsrichtung zu führen und um den vorderen Teil des Kastenaufbaus (20) gegen das Chassis (12) zu drücken.

6. Anhänger (10) nach einem der vorhergehenden Ansprüche, **dadurch gekennzeichnet, dass** der Kastenaufbau (20) in seiner hinteren Verwendungsposition am Chassis (12) überstehend angeordnet ist.

7. Anhänger (10) nach einem der vorhergehenden Ansprüche, **dadurch gekennzeichnet, dass** der Kastenaufbau (20) zwei Schutzbleche (26) aufweist, die jeweils über einem zugeordneten Rad (18) angeordnet sind, wenn der Kastenaufbau (20) seine hintere Verwendungsposition einnimmt, und die jeweils vor dem zugeordneten Rad (18) angeordnet sind, wenn der Kastenaufbau (20) seine vordere zurückgezogene Position einnimmt, und dass der Arm (28) in der Weise angeordnet ist, dass jedes Schutzblech (26) das zugeordnete Rad umgeht, wenn der Kastenaufbau (20) zwischen seiner hinteren Verwendungsposition und seiner vorderen Position geschwenkt wird.

8. Anhänger (10) nach einem der vorhergehenden Ansprüche, **dadurch gekennzeichnet, dass** der Anhänger (10) Mittel zum Verriegeln des Kastenaufbaus (20) an dem Chassis (12) aufweist, um den Kastenaufbau (20) in seiner hinteren Position und in seiner vorderen Position wahlweise zu verriegeln.

9. Anhänger (10) nach einem der vorhergehenden Ansprüche, **dadurch gekennzeichnet, dass** der Kastenaufbau (20) in seiner hinteren Position in Bezug auf die Querachse (B) der Räder (18) longitudinal zentriert ist.
